# EUROPEAN PATENT APPLICATION

(11) **EP 1 415 938 A1**
(43) Date of publication of application: **06.05.2004**
(21) Application number: 03016141.8
(22) Date of filing: 16.07.2003
(51) Int. Cl.: B65G 17/34

(54) **Check weigher conveyor system**

(30) Priority: 31.10.2002 US 284137
(71) Applicant: Thermo Ramsey Corporation, Minneapolis, Minnesota 55433 (US)
(72) Inventor: Nesdahl, Kevin Allen, Blaine, 55434 Minnesota (US)
(74) Representative: Gislon, Gabriele

(57) **Abstract**

A conveyor slider bed assembly (1) for use with a check weigher as used in the food processing industry. The assembly (1) includes a belt (2) which travels endlessly over a thermoplastic bed (3). The thermoplastic material is impregnated with stainless steel fibers which improve the conductivity of the bed (3) and prevents the accumulation of an electrostatic charge created by the movement of the belt (2) over the bed (3). The bed (3) is attached to a base (8) with a pair of resilient clips (14, 15) which engage corresponding mating surfaces (30, 13) formed in the base (8). The clips (14, 15) permit the removal of the bed (3) from the base (8) without the use of tools.

## Description

### 1. FIELD OF THE INVENTION

The present invention relates generally to the field of endless conveyor mechanisms, and more particularly to a conveyor bed used in conjunction with a check weigher system.

### 2. DESCRIPTION OF RELATED TECHNOLOGY

A check weigher is a device that measures the weight of articles produced during a manufacturing process in order to determine if their weight falls within prescribed limits. In the food processing industry, packages of food are often individually weighed while in motion on a conveyor belt. The check weigher that performs these measurements is typically a self contained unit that includes an endless conveyor belt traveling over a support surface known as a slider bed.

The function of the slider bed is to support the weight of the product being conveyed and to position the conveyor rollers that are used to drive and track the conveyor belt. Most slider bed assemblies are made either of formed sheet metal or machined aluminum. In order for the check weigher to function properly, the conveyor assembly must be both lightweight and very rigid. Aluminum is typically a good material to use in slider bed construction due to its high strength to weight ratio, but in the food processing industry it is a poor choice since equipment is often washed with a caustic cleaning solution that would damage any aluminum with which it came in contact.

Stainless steel must be used in caustic washing environments, but because of the high density of steel it is inherently too heavy satisfy the low weight requirement of a slider bed. The use of stainless steel in slider bed fabrication therefore requires the removal of considerable mass by expensive machining operations. One alternative is to form stainless steel conveyor components from sheet metal, but the tolerance accumulation inherent with sheet metal forming is large when compared with machining operations. Mating parts must be designed to fit within tolerance limits, limiting the functionality and appearance of the assembled conveyor.

If an alternative to metal such as plastic were to be employed in fabricating the slider bed, the movement of the conveyor belt across the plastic surface creates an electrical charge. This charge will eventually create a spark as the accumulated static charge arcs to ground. A metal slider bed can be readily grounded to prevent arcing, but a plastic material is inherently unsuitable due to its properties as an electrical insulator. Attempts have been made to improve the electrical properties of plastic materials. For example, U.S. Patent No. 4,596,670, entitled EMI SHIELDING EFFECTIVENESS OF THERMOPLASTICS, issued to Liu, discloses a method of improving surface conductivity of plastic materials by using conductive fillers. U.S. Patent No. 4,664,971, entitled PLASTIC ARTICLE CONTAINING ELECTRICALLY CONDUCTIVE FIBERS, issued to Soens, discloses methods of fabricating plastic plates and sheets with improved surface conductivity due to the presence of electrically conductive fibers within the plastic. Neither Liu or Soens discuss the structural properties of their resultant materials in the context of check weigher slider bed requirements. Thus the need remains for a slider bed constructed of a strong lightweight material which can be inexpensively fabricated.

The slider bed itself must be rigidly mounted to some structural foundation in order to provide stability and freedom from vibrations that would affect the weighing process.

The manner of the rigid attachment typically involves threaded fasteners which require some tools for installation and removal, making maintenance and periodic cleaning unnecessarily time consuming. Other methods involve special fixtures intended to simplify the conveyor coupling process. For example, U.S. Patent No. 5,701,991, entitled CLAMPING MECHANISM, issued to Helmetsie on December 30, 1997, discloses an assembly used in conjunction with a check weigher. The system utilizes threaded fasteners and pivotable elements to secure a clamp to a rail. U.S. Patent No. 6,035,997, entitled CONVEYOR PAN COUPLING ASSEMBLY, issued on March 14, 2000 to Heninger et al., discloses a T-shaped retainer that is held in place by resilient elements. The coupler includes a removable shank and requires the rotation of the retainer to hold the shank in place. Neither of these devices is specifically tailored to secure a slider bed to a mounting structure, and the need remains to have the ability to remove the slider bed for maintenance and cleaning without the use of tools.

### SUMMARY OF THE INVENTION

The present invention discloses a novel check weigher slider bed that is molded from a two part urethane thermo set plastic material. In order to prevent electrostatic discharges to ground, stainless steel fibers are mixed into the urethane before molding or forming of the slider bed. The stainless steel fiber matrix provides a high resistance but adequately conductive path to ground through an attached motor casing via the ground wire in the conveyor motor power cable. The molded slider bed is attached to a mounting structure without the use of tools via an injection molded clip. The resiliently deformable clip is rigidly affixed to the slider bed by threaded fasteners. The mounting structure is formed to include mating sections which receive the clips. Pins may also be formed within the slider bed that align with mating holes within the mounting structure in order to prevent rotation of the slider bed with respect to the mounting structure after the clips have been engaged.

### BRIEF DESCRIPTION OF THE DRAWINGS

Figure 1 is an exploded perspective view of a check weigher conveyor assembly constructed in accordance with the principles of the present invention;
Figure 2 is a perspective view of the assembled conveyor assembly depicted in Figure 1;
Figure 3 is an exploded end elevation view of the check weigher conveyor assembly depicted in Figure 1;
Figure 4 is top plan view of the check weigher bed depicted in Figure 1;
Figure 5 is a top plan view of the conveyor assembly depicted in Figure 1;
Figure 6 is an end elevation view of the assembled conveyor assembly depicted in Figure 1;
Figure 7 is a side elevation view of the disassembled conveyor assembly depicted in Figure 1;
Figure 8 is a sectional view taken along line 8-8 in Figure 7;
Figure 9 is a detailed elevation view as denoted by circle 9 in Figure 8;
Figure 10 is a detailed view of the interface between a portion of the clip and its corresponding mating surface; and
Figure 11 is a sectional view taken along line 11-11 of Figure 4.

### DETAILED DESCRIPTION OF THE INVENTION

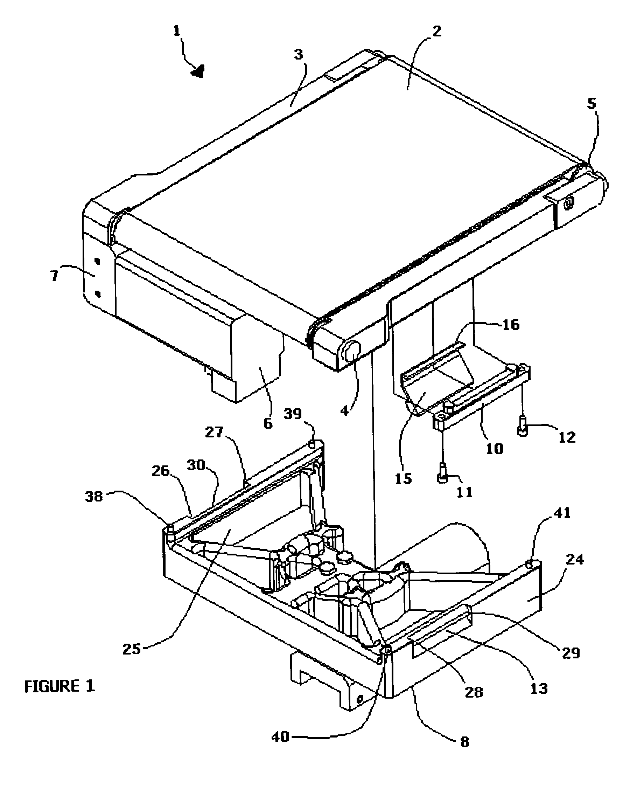

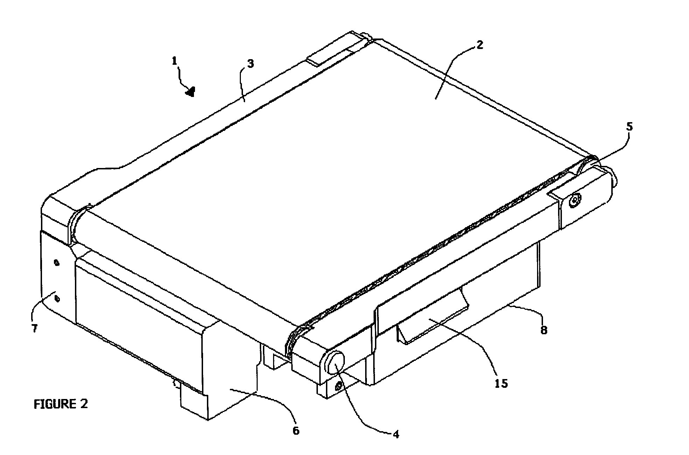

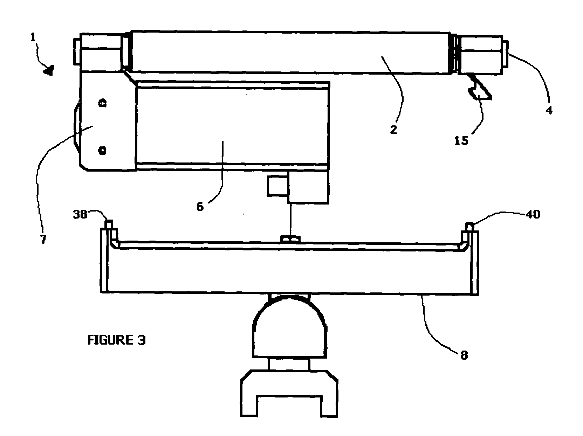

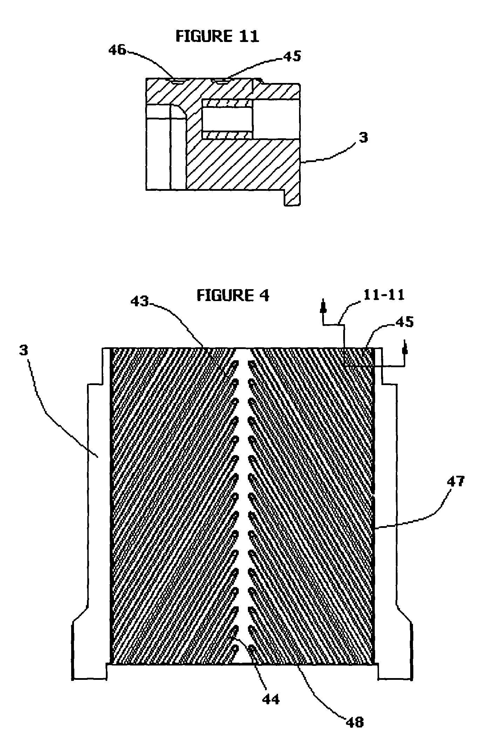

Referring to Figures 1, 2, 3, 4, 5 and 6, a slider bed assembly 1 is seen to include a conveyor belt 2 which is supported on a bed 3. The belt 2 is further supported by a drive roller 4 and a tail roller 5. The drive roller 4 is driven by a timing belt powered by motor 6 which is secured to the bed 3 by motor mount 7. The bed 3 is formed to include a plurality of grooves 43, 44, 45 and 46 which are arranged in a diagonal or chevron pattern. As best seen in Figure 11, the grooves 45 and 46, for example, are formed as substantially arcuate or semicircular indentations. The grooves extend to the edges 47 and 48 of the bed 3 which substantially coincides with the width of belt 2.

The grooves are formed at an angle with respect to edges 47 and 48, typically between ten and eighty degrees. The grooves reduce the extent of surface contact between the belt 2 and the bed 3, thereby reducing the rate at which an electrostatic charge is accumulated on the bed 3. Further, the belt 3 is less likely to stick or adhere to the bed 3 during conditions of relatively high humidity, in the presence of moisture or spilled liquids, or when the belt 2 becomes coated with dust or particulate matter.

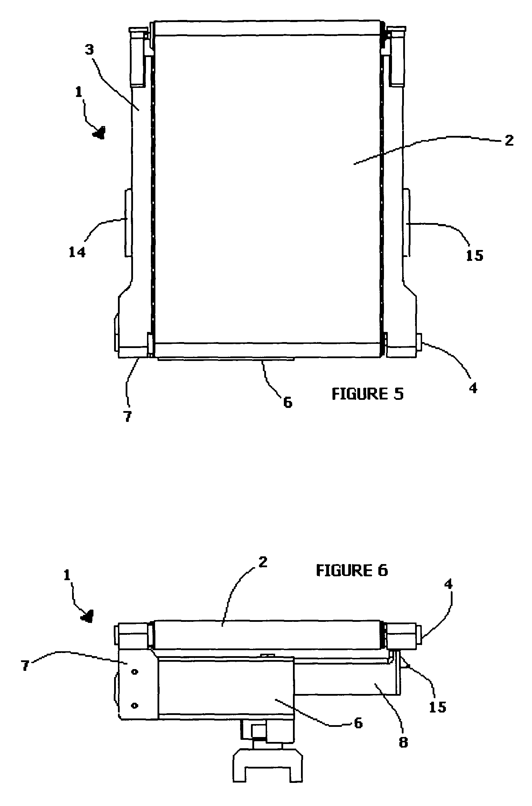

The slider bed assembly 1 also includes a base 8 to which the bed 3 is rigidly affixed by means of clips 15 and 14 (Figure 5). The clip 15 is attached to the bed 3 with a clip mount 10 that is affixed to the bed 3 by means of screws 11 and 12 (Figure 1).

Mating surfaces 13 and 30 are formed into the base 8 which are adapted to receive the clips 15 and 14, respectively.

The bed 3 is composed primarily of a two part urethane thermoplastic. Ideally, component A (specific gravity = 1.16) of the thermoplastic resin has a viscosity of between 37,000 and 43,000 centipoise, while component B (specific gravity = 1.00) has a viscosity of approximately 1,500 to 2,000 centipoise. Typically the mixing ratio of components A and B is approximately 22 units of B for every 100 units of A (by weight). The in mold time for the resulting thermoplastic (specific gravity = 1.13) is typically between 31 and 37 minutes. After a two hour cure at 100 degrees centigrade, the resultant Shore hardness is approximately D80. Both the shear strength and the tensile strength is in the range of 3000 to 3300 pounds per square inch. A urethane resin meeting these specifications and which is also approved by the U.S. Food and Drug Administration for food contact and medical applications (CFR 21.175 -177) is manufactured under the designation TUFFALLOY 280 series by HAPCO, Inc. at 353 Circuit Street, Hanover, Massachusetts 02339.

In order to prevent an electrostatic discharge to ground, stainless steel fibers are mixed into the urethane resin before molding of the bed 3. The stainless steel fiber matrix provides adequate surface conductivity to the finished bed 3.

The stainless steel fibers typically have a diameter of 8 to 11 microns and a length of 4 to 5 millimeters. A ground wire is attached interconnected between the bed 3 and the motor mount 7 in order to provide continuous discharge of the any accumulated static charge caused by movement of the conveyor belt 2 over the bed 3. The result of using urethane for the construction of slider bed 3 is reduced weight when compared to a metal counterpart, as well as the incorporation of structural geometry that would be prohibitively expensive to machine into a metal product. The advantage of employing a two part urethane as the construction material is that the bed 3 can be molded using a reaction injection molding process, thereby reducing the cost of production tooling.

The conductive material within the bed 3 can also be carbon fiber, but since the slider bed assembly 1 is typically used within the food processing industry, stainless steel fibers are the preferred choice because stainless steel is approved in food preparation applications by the FDA. Further, carbon fibers placed in urethane can cause anisotropic shrinkage whereas the stainless steel permits isotropic shrinkage. Carbon fibers are also less conductive and more brittle than stainless steel. Coating the carbon fibers with nickel improves conductivity but the problem of brittleness remains. Carbon fibers and powder are subject to sloughing (making the product unsuitable for food related applications) and limit the color of the finished product to black.

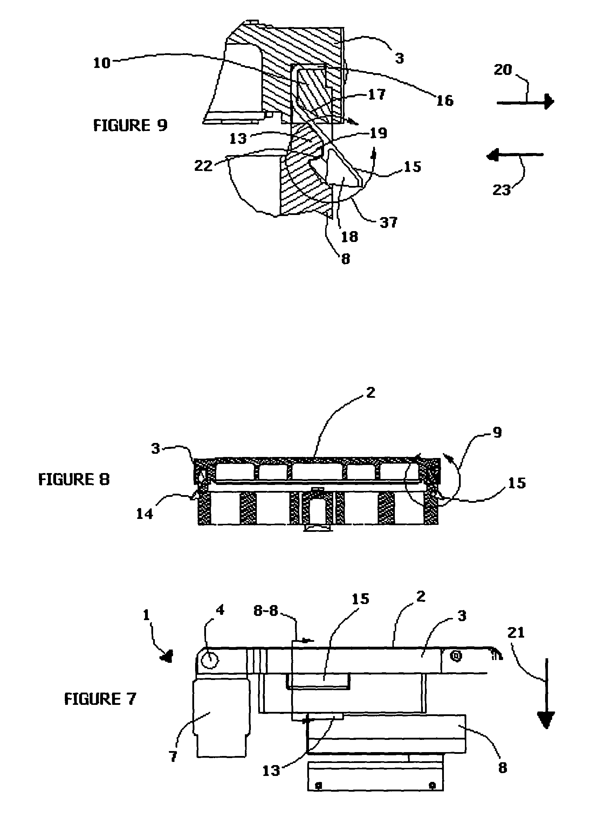

Referring also to Figures 8 and 9, the characteristics of clip 15 can be better understood. The clip 15 is injected molded of a resilient thermoplastic material and is formed to include a tab 16 which is engaged by the mounting block 10 and rigidly affixed to bed 3. The clip 15 is mounted to bed 3 in a cantilevered configuration with a fixed end defined by the tab 16 and a free end 18 which is adapted to engage the mating surface 13 formed within base 8. A lower surface 17 of the mount 10 is inclined to serve as a stop that prevents excessive deflection of the clip 9.

As best seen in Figure 7, the clips 14 (Figure 5) and 15 are positioned for engagement with mating surfaces 13 by positioning the bed 3 over the base 8. The shape of the clip15 is configured so as to cause the free end 18 to contact and interfere with the upper protrusion 19 of the mating surface 13 as the bed 3 is lowered toward base 8. As the initial contact occurs between free end 18 and upper protrusion 19, the free end 18 is deflected outwardly in the direction of arrow 20.

The actual deflection of free end 18 can be initiated in one of two ways. First, the conveyor slider bed 3 can be aligned over base 8 and pushed in the direction of arrow 21. This motion will cause the free end 18 to move into the direction of arrow 20 until the free end moves beyond the bottom surface 22, at which time free end 18 will snap or spring back in the direction of arrow 23, thereby abutting bottom surface 22 and urging bed 3 into rigid contact with base 8. The static configuration of clip 15 is such that free end 18 is still biased in the direction of arrow 23 even when free end 18 abuts bottom surface 22. As best seen in Figure 1, the sidewalls 24 and 25 of the base 8 are formed to include shoulders 26, 27, 28 and 29 adjacent to the mating surfaces 13 and 30. The shoulders abut the clip mounts 10 and prevent rotation of the bed 3 with respect to the base 8 once the clips 14 and 15 engage the mating surfaces 30 and 13, respectively. Alternatively, ribs or pins 38, 39, 40 and 41, for example, can be formed into the base 8 which engage corresponding structures in bed 3 and thereby prevent rotation or shifting of the bed 3.

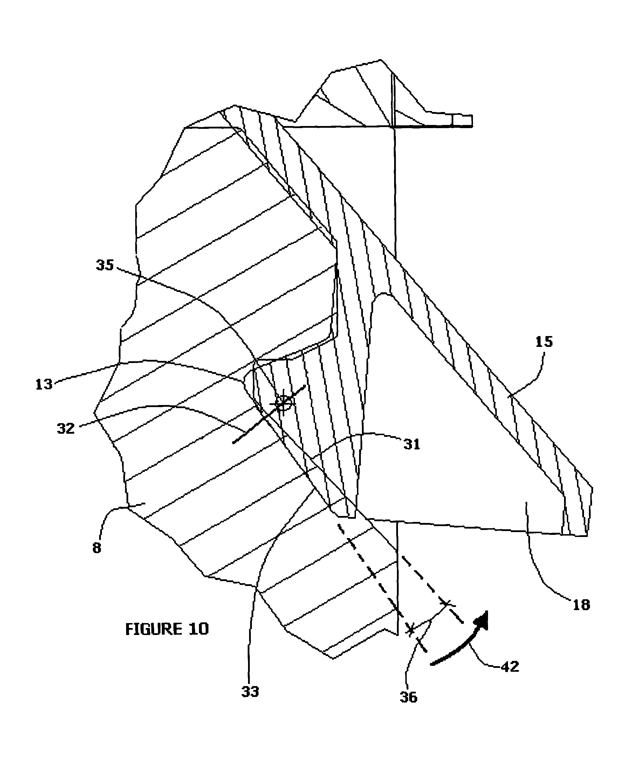

Additional protection against slippage of the clip 15 with respect to the mating surface 13 is provided by the relative shapes of the free end 18 and the lower surface 31 of mating surface 13. As seen in Figures 9 and 10 (Figure 10 being a detailed view of the region 37 circled in Figure 9), the line 32 is perpendicular to the beveled surface 33 of the free end 18, the beveled surface 33 abutting portions of lower surface 31 when the clip 15 is mounted to mating surface 13. When fully engaged, the lower surface 31 and the beveled surface 33 overlap slightly.

The line 32 passes through the center of rotation 35 of the beveled surface 33, that is, as the clip 15 is deformed the beveled surface 33 rotates in the direction of arrow 42 about center of rotation 35. Therefore, the clip 15 cannot slip with respect to mating surface 13 until the tangent of angle 36 between lower surface 31 and beveled surface 33 is greater than the coefficient of friction of the thermoplastic material of which clip 15 and mating surface 13 are formed.

A second method of attaching the conveyor bed 3 to base 8 is to set the bed 3 onto the base 8 and align the clips 14 and 15 with the mating surfaces 30 and 13. The free end 18 of each clip 14 and 15 is then manually deflected in the direction of arrow 20. The bed 3 is then moved further in the direction of arrow 21 and the clips 14 and 15 are ultimately released when the bed 3 abuts base 8. This second method of mounting bed 3 to base has the advantage of eliminating any impulse force caused by shock of pressing the bed 3 onto base 8 with sufficient force to overcome the resilient biasing force present in the clips 14 and 15. A strain gauge is typically attached to the conveyor bed 3 when used as a check weigher and the gauge can be damaged by repeated sudden impact forces.

## Claims

1. A conveyor assembly, comprising:
an endless belt;
a thermoplastic bed, the thermoplastic bed supporting the endless belt; and
a motor assembly, the motor assembly including at least one electrically conductive component that is interconnected to the thermoplastic bed so as to substantially prevent accumulation of an electrostatic charge on the thermoplastic bed.

2. The conveyor assembly of claim 1, wherein the thermoplastic bed further comprises an electrically conductive resin, thereby causing the thermoplastic bed to behave as an electrical conductor.

3. The conveyor assembly of claim 1, wherein the thermoplastic bed is formed of a thermoplastic material, the thermoplastic material comprising:
a resin, the resin behaving as an electrical insulator; and
a plurality of electrical conductors, the electrical conductors being mixed with the resin so as to produce a resultant thermoplastic material the is substantially electrically conductive.

4. The conveyor assembly of claim 3, wherein the plurality of electrical conductors are formed substantially from stainless steel.

5. The conveyor assembly of claim 3, wherein the plurality of electrical conductors are formed substantially from carbon.

6. The conveyor assembly of claim 1, wherein the thermoplastic bed further comprises:
a surface, the surface adapted to abut a portion of the endless belt; and
a plurality of grooves, the grooves being formed in the surface so as to reduce abutting contact between the belt and the surface.

7. The conveyor assembly of claim 6, wherein the grooves are arranged in a diagonal pattern such that an angle of between ten and eighty degrees is created between an edge of the surface and at least some of the grooves.

8. The conveyor assembly of claim 7, wherein the bed is formed of a two part urethane that is molded into a desired shape using reaction injection molding.

9. The conveyor assembly of claim 8, further comprising:
a base, the bed being rigidly affixed to the base; and
at least one resilient clip, the resilient clip being adapted to urge the base and the bed into contact with each other.

10. The conveyor assembly of claim 9, wherein the clip further comprises:
a fixed end, the fixed end being rigidly affixed to the bed; and
a free end, the free end being adapted to grip a surface of the base.

11. A clip assembly, comprising:
a cantilevered clip, the clip having a fixed end and a free end;
a clip mount, the clip mount being adapted for rigid mounting to surface, the clip mount rigidly affixing the free end of the cantilevered clip to the surface.

12. The clip assembly of claim 11, wherein the free end of the clip further comprises an angled surface, the angled surface being adapted to abut an inclined surface formed within a body to be engaged by the clip assembly.

13. The clip assembly of claim 12, wherein the clip assembly is formed of a resilient material, thereby permitting the free end of the cantilevered clip to be deflected with respect to the fixed end.

14. The clip assembly of claim 13, wherein the cantilevered clip further comprises a center of rotation, the center of rotation defining a point about which the free end rotates when the free end is deflected, the center of rotation residing on a line that is substantially perpendicular to the angled surface.

15. The clip assembly of claim 14, wherein the resilient material forming the clip is **characterized by** a coefficient of friction, the free end of the clip being substantially resistant to slippage whenever an angle formed by the angled surface of the free end with respect to a surface in contact with the angled surface is **characterized by** a tangent that is less than the coefficient of friction.

16. The clip assembly of claim 15 wherein the free end of the clip remains in a biased state when the angled surface of the free end abuts the inclined surface of the body to be engaged by the clip assembly.
